# EUROPÄISCHE PATENTSCHRIFT

(11) **EP 1 064 493 B1**
(45) Veröffentlichungstag und Bekanntmachung des Hinweises auf die Patenterteilung: **12.11.2003**
(21) Anmeldenummer: 99919079.6
(22) Anmeldetag: 09.03.1999
(51) Int. Cl.: F17C 1/00

(54) **VORRICHTUNG ZUM SPEICHERN VON DRUCKGAS**
DEVICE FOR STORING PRESSURIZED GAS
DISPOSITIF DE STOCKAGE DE GAZ SOUS PRESSION

(30) Priorität: 18.03.1998 DE 19812904
(43) Veröffentlichungstag der Anmeldung: 03.01.2001
(73) Patentinhaber: MANNESMANN Aktiengesellschaft, 40213 Düsseldorf (DE)
(72) Erfinder: OSTHOLT, Rüdiger, D-58300 Wetter (DE)
(74) Vertreter: Müller, Thomas, Dipl.-Ing.
(86) Internationale Anmeldenummer: DE9900717
(87) Internationale Veröffentlichungsnummer: WO99047850

(56) Entgegenhaltungen:
- DE-A- 3 022 859
- FR-A- 868 784
- FR-A- 2 757 248
- FR-E- 51 472

## Beschreibung

Die vorliegende Erfindung betrifft eine Vorrichtung zum Speichem von Druckgas mit einer Vielzahl von Speicherbehältem, die jeweils eine Behälterwand aufweisen, die einen zur Speicherung des Druckgases vorgesehenen Hohlraum umschließt, wobei die Speicherbehälter untereinander leitungsmäßig verbunden sind und jeder Speicherbehälter ein Kopfstück aufweist, das mit der Behälterwand verbunden ist, und mit wenigstens einem Anschluß zum Be- und/oder Entladen des Druckgases.

Gase werden üblicherweise in besonderen Behältern transportiert, die zum einen eine Verflüchtigung der Gase verhindern und zum anderen so stabil konzipiert sein müssen, daß das Gas bei Beschädigung des Behälters nicht schlagartig freigesetzt werden kann. Weiterhin müssen diese Behälter, wenn sie etwa zur Speicherung von Gasen mit hohem Druck verwendet werden, eine äußerst feste und stabile Behälterwand aufweisen. Üblicherweise bestehen solche Behälter für Druckgas aus Stahl oder einem anderen Metall. Aus Festigkeitsgründen werden dabei entweder Kugelformen oder Zylinderformen bevorzugt Derartige Behälter haben jedoch den Nachteil, daß sie zum einen auch im Leerzustand ein sehr hohes Eigengewicht aufweisen. Weiterhin ist die Menge des zu speichernden Gases durch die vorliegende Behältergeometrie stark begrenzt.

Im Hinblick auf eine Erhöhung der Menge des zu speichernden Gases ist aus der US-A 5,577,630 ein Druckbehälter bekannt, der zur Speicherung von Erdgas dient. Er besteht aus einer Reihe von langgestreckt Speicherelementen, die aus Kunststoff bestehen und nebeneinander angeordnet sind. Dabei stützen sich die Speicherelemente über die sich berührenden Wände gegenseitig ab. Die Speicherstruktur ist mit einem Gewebe umwickelt, um die Festigkeit des Behälters zu steigern. Durch die Anordnung mehrerer Speicherelemente nebeneinander wird ein einziger Druckbehälter geschaffen, der im Vergleich zu den bisher üblichen zylindrischen Druckbehältern eine wesentlich größere Menge an Druckgas aufnehmen kann. Da jedoch die einzelnen Speicherelemente von einer einzigen Hüllschicht umgeben sind, kann der Behälter in seiner geometrischen Form nicht individuell an unterschiedliche Anforderungen angepaßt werden. Weiterhin hat der bekannte Behälter den Nachteil, daß im Falle der Beschädigung eines einzigen Speicherelements der gesamte Behälter ausgetauscht werden muß.

Ferner sind Gastransportfahrzeuge bekannt, bei denen Druckgas in großen flaschenartigen Behältern gespeichert wird, die parallel zueinander liegend angeordnet sind und stimseitig durch entsprechende Verbindungsleitungen miteinander kommunizieren können. Die einzelnen Behälter, die aus Stahlrohren gebildet sind, können in ihrem zylindrischen Teil mit einem Fasermaterial zur Erhöhung der Festigkeit umwickelt sein und werden durch ein äußeres Traggesteil zusammengehalten.
Die Schrift FR 51 472 beschreibt eine Vorrichtung zum Speichern von Druckgas mit einer Anzahl von Speicherbehältern, wobei die Speicherbehälter mittel mechanischer Mittel miteinander verbunden und gemeinsam befestigt sind und wobei die Speicherhohlräume der Behälter untereinander über Rohrleitungen in Verbindung stehen.

Ausgehend vom genannten Stand der Technik liegt der vorliegenden Erfindung die Aufgabe zugrunde, eine Vorrichtung zum Speichern von Druckgas zu schaffen, die zum einen eine ausreichende Festigkeit in bezug auf das zu speichemde Gas aufweist und die zum anderen platzsparend ist und in ihrer geometrischen Struktur individuell an den zur Verfügung stehenden Platz sowie an die Menge des zu speichernden Gases angepaßt werden kann.

Die Aufgabe wird erfindungsgemäß durch eine Vorrichtung mit den im Anspruch 1 angegebenen Merkmalen gelöst. Bei dem erfindungsgemäßen Gasspeicher weist jeder Speicherbehälter ein Kopfstück auf, das mit der Behälterwand verbunden ist. Die Speicherbehälter sind über die jeweiligen Kopfstücke unmittelbar aneinandergereiht modulartig zu einer kompakten Baueinheit mechanisch miteinander verbunden oder verbindbar. Die Kopfstücke berühren sich also gegenseitig. Zur Erhöhung der Festigkeit oder zum Schutz des Gasspeichers ist es vorteilhaft, wenn jeder der Speicherbehälter eine zusätzliche Hüllschicht aufweist, die zumindest in Teilbereichen des jeweiligen Speicherbehälters an der Behälterwand angeordnet ist.
Dadurch wird eine Vorrichtung zum Speichern von Druckgas geschaffen, die individuell an die unterschiedlichsten Anforderungen angepaßt werden kann. Je nach der Menge des zu speichernden Gases kann die Vorrichtung um entsprechende Speicherbehälter erweitert oder verkleinert werden. Dadurch kann nicht nur die Menge des zu speichernden Gases variiert werden, sondern es ist auch möglich, die Vorrichtung an den zur Verfügung stehenden Raum anzupassen. Die einzelnen Speicherbehälter können nämlich sowohl nebeneinander als auch übereinander angeordnet werden, so daß die Geometrie der zur Verfügung gestellten Vorrichtung insgesamt von den bisherigen kugelförmigen oder zylindrischen Konfigurationen abweichen kann.

Die erfindungsgemäße Bauweise ermöglicht ein enges Aneinanderliegen der einzelnen Speicherbehälter und ist somit kompakt und außerordentlich volumensparend.
Die gesamte aus den einzelnen Speicherbehältern zusammengesetzte Baueinheit besitzt eine hohe Steifigkeit insbesondere im Hinblick auf die Verwindung der Baueinheit in Richtung der Längsachse der Speicherbehälter. Es werden nicht, wie aus dem Stand der Technik bekannt, für jeden Speicherbehälter zu dessen Befestigung besondere Befestigungsmittel benötigt.
Sollte einer der Speicherbehälter während des Gebrauchs der Vorrichtung beschädigt werden und deshalb ausgetauscht werden müssen, kann der entsprechende Speicherbehälter aus der gesamten Vorrichtung herausgenommen und durch einen neuen Speicherbehälter ersetzt werden. Ein Austausch der gesamten Vorrichtung kann somit entfallen. Dies führt unter anderem zu einer erheblichen Kostenreduktion. Weiterhin ist es möglich, daß während des Austauschs des beschädigten Speicheretements die Vorrichtung weiter benutzt werden kann, wenn entsprechende Absperrventile vorgesehen sind. Dies führt zu einer Verringerung der Standzeiten der mit der Vorrichtung betriebenen Anlagen.

Um eine besonders hohe Festigkeit der Speicherbehälter zu erzielen, kann die Hüllschicht auf der äußeren Oberfläche der Behälterwand angeordnet sein. Es ist jedoch auch möglich, daß die Hüllschicht auf der inneren Oberfläche der Behälterwand oder innerhalb der Behälterwand angeordnet ist. Natürlich kann, insbesondere wenn mehrere Hüllschichten verwendet werden, auch eine Kombination der verschiedenen Möglichkeiten zur Anordnung der Hüllschicht/Hüllschichten vorgenommen werden.

Die Behälterwand kann beispielsweise einteilig oder mehrteilig ausgebildet sein. Bei der mehrteiligen Ausgestaltung der Behälterwand muß jedoch sichergestellt werden, daß die einzelnen Teile auf geeignete Weise gasdicht miteinander verbunden werden. Die einzelnen Speicherbehälter können auf einfache und kostengünstige Weise hergestellt und auf ebenso einfache Weise miteinander verbunden werden, was zu einer hohen Kosteneinsparung bei der Herstellung der erfindungsgemäßen Vorrichtung führt.

Bevorzugte Ausgestaltungen der Erfindung ergeben sich aus den Unteransprüchen.

In bevorzugter Weise kann das Kopfstück stoffschlüssig, vorzugsweise mittels Löten oder Schweißen mit der Behälterwand verbunden sein. Natürlich sind auch andere Formen der Verbindung denkbar, wichtig ist lediglich, daß das Kopfstück und die Behälterwand gasdicht und in Abhängigkeit vom zulässigen Gasdruck ausreichend schub- und zugfest miteinander verbunden sind.

In weiterer Ausgestaltung können die Speicherbehälter zylindrisch ausgebildet sein. Die zylindrische Form der Behälterwand bietet optimale Festigkeitseigenschaften in bezug auf den herrschenden Expansionsdruck des gespeicherten Gases. In einer zweckmäßigen Ausgestaltung kann ein Speicherbehälter beispielsweise einen Innendurchmesser von 56 cm und einen Außendurchmesser von 60 cm aufweisen.

In weiterer Ausgestaltung weist ein Speicherbehälter in seinem zur Aufnahme in dem Kopfstück dienenden Endbereich eine konische Querschnittsverjüngung auf. Vorteilhaft sind die Seitenwände des Kopfstücks, die mit der Querschnittsverjüngung des Speicherbehälters korrespondieren, entsprechend ausgebildet Dadurch kann die Festigkeit der Verbindung zwischen Kopfstück und Behälterwand weiter verbessert werden. Weiterhin wird durch die Querschnittsverjüngung der Behälterwand-Enden eine besonders große Packungsdichte der Speicherbehälter innerhalb der Vorrichtung ermöglicht.

In weiterer Ausgestaltung sind zur Verbindung der Speicherbehälter Verbindungselemente vorgesehen. Diese Verbindungselemente können vorzugsweise stabförmig ausgebildet sein. Beispielsweise jedoch nicht ausschließlich- können die Verbindungselemente die Funktion von Zugankem haben und als Gewindestangen oder Dehnschrauben ausgebildet sein. Dies ermöglicht es, die Speicherbehälter über die Kopfstücke lösbar miteinander zu verbinden.

In weiterer Ausgestaltung kann jedes der Kopfstücke wenigstens eine, vorzugsweise zwei Öffnungen zur Aufnahme von den Verbindungselementen aufweisen. Dabei entspricht der Durchmesser der Öffnungen vorteilhaft in etwa den äußeren Durchmessern der Verbindungselemente. Zweckmäßig erstreckt sich die wenigstens eine Öffnung durchgehend über die gesamte Breite des Kopfstücks. Damit kann für die Verbindung der einzelnen Speicherbehälter ein gemeinsames Verbindungselement verwendet werden. Das Verbindungselement wird durch alle Kopfstücke hindurchgeführt, so daß die Kopfstücke, insbesondere wenn jeweils zwei Öffnungen vorgesehen sind, fluchtend und in einer geraden Reihe nebeneinander ausgerichtet werden können. Dies ist insbesondere dann von Vorteil, wenn im Kopfstück - wie weiter unten näher erläutert wird - ein Strömungskanal vorgesehen ist, durch den das Druckgas nach dem Austreten aus dem Hohlraum des Speicherbehälters hindurchgeführt wird. Hierbei ist es besonders wichtig, daß zur Bildung eines einheitlichen Strömungskanals die Kopfstücke nicht gegeneinander verschoben sind.

Bei Verwendung eines durch alle Kopfstücke hindurchgehenden Verbindungselements, beispielsweise einer Gewindestange, können im Austrittsbereich des Verbindungselements aus den jeweils äußeren Kopfstücken geeignete Befestigungselemente vorgesehen sein. Als geeignete Befestigungselemente sind beispielsweise Muttern oder dergleichen zu nennen.

Soll beispielsweise ein beschädigter Speicherbehälter ausgetauscht werden, werden die Befestigungselemente vom Verbindungselement gelöst, wodurch die einzelnen Speicherbehälter voneinander getrennt werden können. Der beschädigte Speicherbehälter kann nun innerhalb kürzester Zeit durch einen neuen Speicherbehälter ersetzt werden. Die einzelnen Speicherbehälter werden wieder zusammengeschoben und über die Befestigungselemente fest miteinander verbunden.

Grundsätzlich möglich ist es, die Speicherbehälter durch separate Rohrleitungen miteinander zu verbinden. Besonders vorteilhaft aber kann, wie vorstehend bereits beschrieben wurde, im Kopfstück ein Strömungskanal zum Durchfeilen des Druckgases vorgesehen sein. Dieser Strömungskanal erstreckt sich durchgehend über die gesamte Breite des Kopfstücks. Er dient zum Ableiten des aus den Speicherbehältem austretenden Gases und hat in einer bevorzugten Ausführungsform einen Innendurchmesser von etwa 8 mm. Allerdings ist die Erfindung nicht auf die Verwendung spezieller Durchmesser für den Strömungskanal beschränkt.

Der Strömungskanal kann erfindungsgemäß in den stimseitigen Endbereichen des Kopfstücks jeweils ein Dichtungselement aufweisen. Ein solches Dichtungselement, das beispielsweise ein O-Ring oder dergleichen sein kann, dient dem Zweck, daß die einzelnen Kopfstücke insbesondere im Bereich des Strömungskanals gasdicht miteinander verbunden sind. Der Strömungskanal kann über eine Bohrung mit dem Hohlraum des Speicherbehälters kommunizieren.

Vorteilhafterweise kann in der Bohrung ein Ventil, vorzugsweise ein Rückschlagventil angeordnet sein. Das Ventil kann die Funktion einer Drossel oder eines Strömungswächters übernehmen. Dies ist insbesondere dann von Vorteil, wenn der Speicherbehälter beschädigt wird. Dadurch wird verhindert, daß Gas, das aus den übrigen Speicherbehältem in den Strömungskanal strömt, über den beschädigten Speicherbehälter aus der Vorrichtung austreten kann. Dazu ist im Normalbetrieb der Vorrichtung das Ventil auf Grund des im Speicherbehälter herrschenden hohen Drucks des Gases geöffnet. Sollte der Speicherbehälter beispielsweise aufplatzen oder auf andere Weise beschädigt werden, wird das Ventil auf Grund des abfallenden Drucks im Speicherbehälter sowie des im Strömungskanal herrschenden Gasdrucks geschlossen. Somit kann das in den anderen Speicherbehältern gespeicherte Gas nicht entweichen, und die Vorrichtung kann auch trotz des beschädigten Speicherbehälters weiterhin benutzt werden.

In weiterer Ausgestaltung kann wenigstens eines der Kopfstücke eine Anschlußöffnung aufweisen. Über eine derartige Anschlußöffnung können beispielsweise mehrere in Reihe geschaltete Speicherbehälter mit anderen Reihen von Speicherbehältern verbunden werden. Durch die entsprechende Anschlußöffnung ist somit eine Anordnung der Speicherbehälter sowohl nebeneinander als auch übereinander möglich.

Erfindungsgemäß kann der Speicherbehälter an dem dem Kopfstück gegenüberliegenden Ende der Behälterwand ein Deckelelement aufweisen. Das Deckelelement, das vorzugsweise aus dem gleichen Material wie das Kopfstück besteht, kann ebenfalls über Schweißen, Löten oder dergleichen mit der Behälterwand verbunden werden. Natürlich sind auch hier andere Arten der Verbindung denkbar, wichtig ist wiederum, daß das Deckelelement gasdicht und in Richtung der Behälterlängsachse zugfest mit der Behälterwand verbunden ist.

In bevorzugter Ausführung kann das Kopfstück und/oder das Deckelelement aus Metall, vorzugsweise aus Guß-Material bestehen. Insbesondere kann als Material Feinguß verwendet werden.

Erfindungsgemäß kann die Behälterwand aus einem Material gebildet sein, das insbesondere zur Aufnahme von Kräften in Längsrichtung des Speicherbehälters geeignet ist. Vorzugsweise kann die Behälterwand aus Metall, Kunststoff und/oder einem Faserverbundmaterial gebildet sein.

Die Behälterwand kann beispielsweise aus PP (Polypropylen), insbesondere aus langfasrigem PP gebildet sein. Hierbei sind die Fasern des PP vorzugsweise in Richtung der Längsachse des Behälters ausgerichtet. Die Behälterwand kann natürlich auch aus anderen Materialien bestehen. Zu beachten ist dabei besonders, daß das Material möglichst gasdicht ist, d.h. keine nennenswerte Diffusion des zu speichernden Gases durch die Behälterwand erlaubt. Werden für die Behälterwand Faserverbundmaterialien verwendet, so können diese beispielsweise - jedoch nicht ausschließlich - Glasfasern, Aramidfasem, Borfasern, organische Polymerfasern, Kohlenstoffasern oder andere Fasertypen enthalten. Wichtig ist lediglich, daß die Fasern eine ausreichend hohe Festigkeit haben, um dem Expansionsdruck der im Behälter gespeicherten Gase widerstehen zu können. Wird für die Behälterwand ein Metall verwendet, so kann es sich hierbei vorzugsweise um Stahl, insbesondere ST 52 handeln.

Die Behälterwand kann in weiterer Ausgestaltung der Erfindung durch eine zusätzlicheHüllschicht aus einem Material verstärkt sein, das insbesondere zur Aufnahme von Kräften in Umfangsrichtung des Speicherbehälters geeignet ist. Derartige Materialien sind vorzugsweise Kunststoff und/oder Fasermaterialien. Als weitere bevorzugte Materialien sind beispielsweise die in bezug auf die gasdichte Behälterwand beschriebenen Materialien zu nennen. Die Hüllschicht selbst braucht nicht gasdicht zu sein.

Die zu speichernden Gase können beispielsweise gasförmige Treibstoffe, wie Erdgas oder Wasserstoff, oder Luft, Sauerstoff, Stickstoff oder aber technische Gase oder dergleichen sein. Die Erfindung ist auf keine besondere Art von Speichergasen beschränkt.

Die Erfindung wird nun anhand eines Ausführungsbeispiels unter Bezugnahme auf die beiliegende Zeichnung näher beschrieben. Es zeigen:
- Figur 1: eine perspektivische Ansicht der erfindungsgemäßen Vorrichtung;
- Figur 2: einen Querschnitt durch einen in der erfindungsgemäßen Vorrichtung verwendeten Speicherbehälter;
- Figur 3: einen Querschnitt durch ein in der erfindungsgemäßen Vorrichtung verwendetes Kopfstück;
- Figur 4: eine Schnittansicht entlang der Schnittlinie IV-IV gemäß Figur 3; und
- Figur 5: eine Anordnungsvariante von einer Vielzahl von Speicherbehältem in der erfindungsgemäßen Vorrichtung.

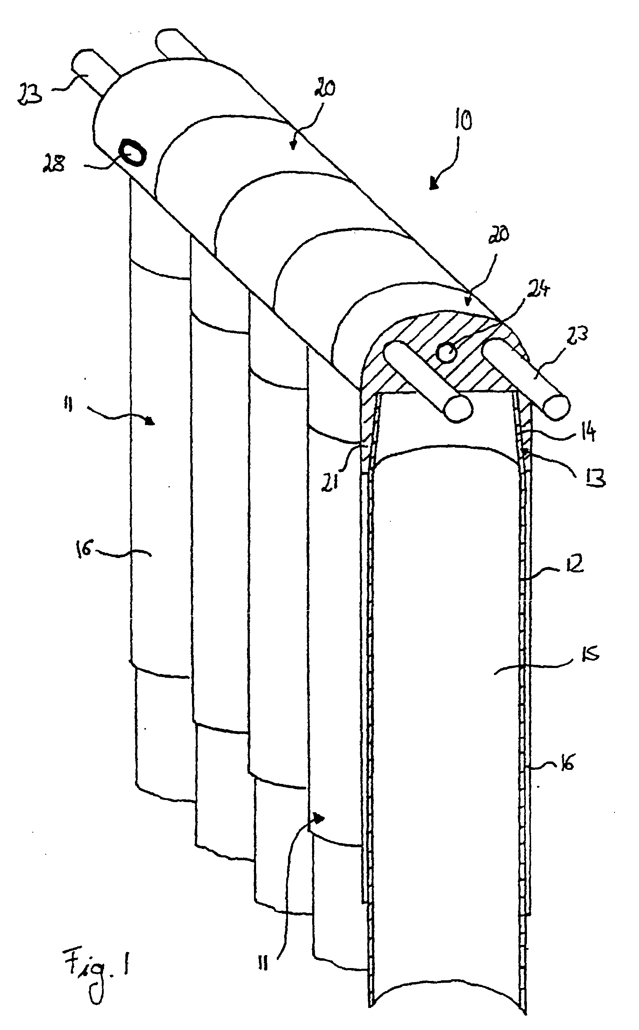

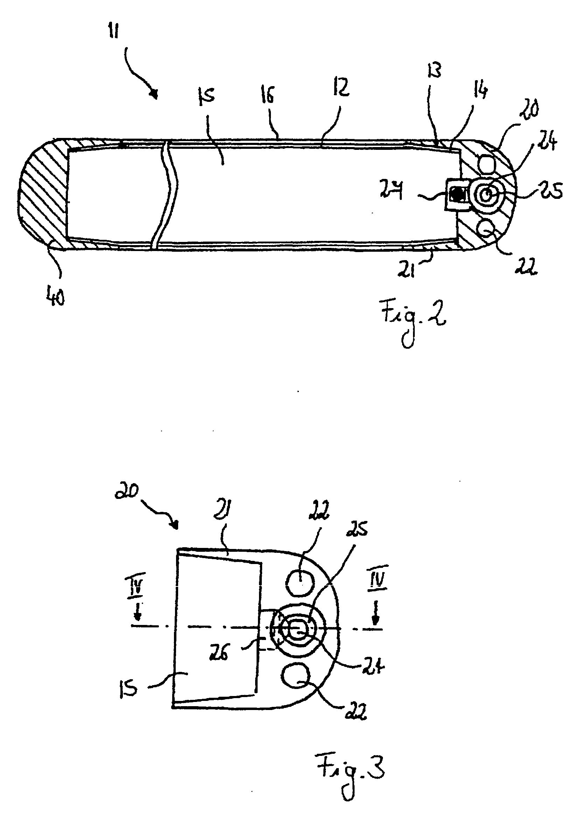

In Figur 1 ist eine Vorrichtung 10 zum Speichern von Druckgas dargestellt. Die Vorrichtung 10 weist ein Vielzahl von Speicherbehältem 11 auf, die über Kopfstücke 20 miteinander verbunden sind. Wie zusätzlich auch in Figur 2 dargestellt ist, weisen die Speicherbehälter 11 eine Behälterwand 12 auf, die aus einem metallischen Material, vorzugsweise aus Stahl hergestellt ist. Dadurch kann die Behälterwand 12 Längsspannungen, die von dem im Speicherbehälter 11 gespeicherten Druckgas ausgeübt werden, vorteilhaft aufnehmen und kompensieren. Die Behälterwand 12 umschließt einen zur Speicherung des Druckgases vorgesehenen Hohlraum 15. Damit auch die noch höheren Spannungen in Umfangsrichtung des Speicherbehälters 11 von der Behälterwand kompensiert werden können, ist zusätzlich an der äußeren Oberfläche der Behälterwand 12 eine Hüllschicht 16 vorgesehen. Die Hüllschicht 16 besteht zweckmäßig aus gewickelten Kohlenstoffasern, die durch eine duroplastische oder thermoplastische Matrix gehalten werden. Die Behälterwand 12 ist in ihren jeweiligen Endbereichen durch ein Deckelelement 40 sowie das Kopfstück 20 abgedichtet. Das Deckelelement 40 und das Kopfstück 20 bestehen aus Feinguß und sind mittels einer Lötverbindung stoffschlüssig mit der Behälterwand 12 verbunden. Auf diese Weise ist der Hohlraum 15 von allen Seiten gasdicht abgeschlossen. Um die Festigkeit dieser Verbindung zusätzlich zu erhöhen und um die Packungsdichte der Speicherbehälter 11 in der Vorrichtung 10 so groß wie möglich zu halten, weisen die Speicherbehälter 11 in ihrem zur Aufnahme in den Kopfstücken 20 dienenden Endbereich 13 eine konische Querschnittsverjüngung 14 auf. Die Seitenwände 21 des Kopfstücks 20 sowie die Seitenwände des Deckelelements 40 sind korrespondierend zur Konfiguration dieser Querschnittsverjüngungen ausgebildet.

Zur modularen Verbindung der einzelnen Speicherbehälter 11 weisen die massiv ausgeführten Kopfstücke 20 jeweils zwei Öffnungen 22 zur Aufnahme von Verbindungselementen 23 auf. Dabei erstrecken sich die Öffnungen 22 über die gesamte Breite der Kopfstücke 22. Weiterhin ist in den Kopfstücken 20 ein Strömungskanal 24 vorgesehen, der sich ebenfalls über die gesamte Breite der Kopfstücke 20 erstreckt. Der Strömungskanal 24 korrespondiert über eine Bohrung 26 mit dem Hohlraum 15 des jeweiligen Speicherbehälters 11. Innerhalb der Bohrung 26 ist ein Rückschlagventil 27 vorgesehen. Zur zuverlässigen Abdichtung der aneinandergereihten Kopfstücke 20 im Bereich des Strömungskanals 24 sind an den Stirnseiten der Kopfstücke 20 an den außenliegenden Enden des Strömungskanals 24 als O-Ring ausgebildete Dichtungselemente 25 vorgesehen.

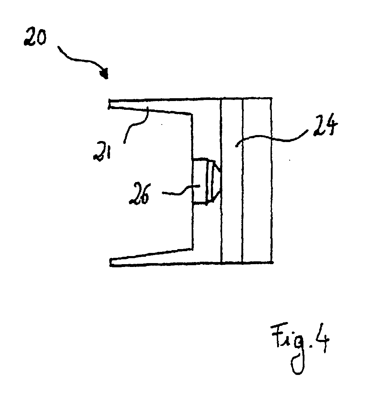

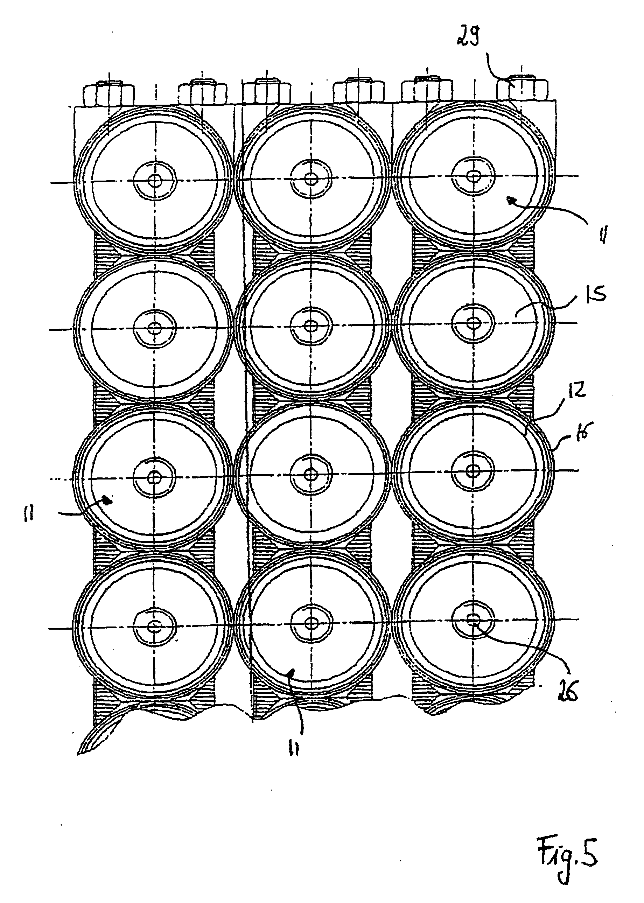

Beim Zusammenbau der Vorrichtung 10 werden die einzelnen Speicherbehälter 11 derart zusammengefügt, daß sowohl die Öffnungen 22 als auch der Strömungskanal 24 fluchtend in einer geraden Linie ausgerichtet sind. Dann werden die Verbindungselemente 23, die als Gewindestangen ausgebildet sein können, in die Öffnungen 22 eingesteckt und durch sämtliche Kopfstücke 20 hindurchgeführt. Um die Speicherbehälter 11 in der gegebenen Position zu halten, sind an den äußeren, freiliegenden Enden der Verbindungselemente 23 als Muttern 29 ausgebildete Befestigungselemente vorgesehen (siehe Figur 5). Auf diese Weise üben die Verbindungselemente 23 die Funktion eines Zugankers aus.

Um die einzelnen Speicherbehälter 11 nicht nur in einer Reihe sondern auch übereinander gelagert anordnen zu können, weist wenigstens ein Kopfstück 20 eine Anschlußöffnung 28 auf. Über die Anschlußöffnung 28 ist der Strömungskanal 24 einer Reihe von nebeneinander angeordneten Speicherbehältern 11 mit dem Strömungskanal einer anderen Reihe von Speicherbehältern verbunden, so daß sich ein schichtartig aufgebauter z. B. quaderförmiger Gesamtspeicher ergibt. Eine mögliche Konfiguration von Speicherbehältern 11 in insgesamt drei Ebenen ist in Figur 5 dargestellt. Dabei kann die Anzahl der in Reihe geschalteten Speicherbehälter 11 sowie die Anzahl der übereinander geschichteten Reihen von Speicherbehältern 11 je nach Anforderung und Bedarf beliebig gewählt werden. Die einzelnen Ebenen können in entsprechender Weise (nicht dargestellt) über die Kopfstücke mittels Zuganker zusammengehalten werden.

Durch die erfindungsgemäße Gestaltung der Kopfstücke 20 mit den integrierten Strömungskanälen 24 und gegebenenfalls den Anschlußöffnungen 28 sowie die engelegten Dichtungen können die einzelnen Speicherbehälter 11 modulartig auf besonders einfache und kostengünstige Weise funktionssicher miteinander verbunden werden, da eine entsprechende Verrohrung entfällt. Dies hat auch deutliche Vorteile in Bezug auf die Unfallsicherheit, da mögliche Beschädigungen entsprechender Verbindungsleitungen nicht mehr möglich sind.

Zur Verbesserung der Raumausnutzung, d.h. zur Erhöhung der Packungsdichte der Speicherbehälter 11 kann in Weiterbildung der Erfindung vorgesehen sein, daß die Speicherbehälter 11 einer Reihe von Speicherbehältem im Unterschied zur Konstellation in Figur 5 jeweils versetzt zu den Speicherbehältern 11 der unmittelbar benachbarten Reihe von Speicherbehältern angeordnet werden. Dadurch passen die Speicherbehälter 11 einer Reihe besser in die Lücken der Speicherbehälter 11 der unmittelbar benachbarten Reihe hinein. Dies setzt allerdings eine andere Gestaltung der äußeren Kontur der Kopfstücke 20 im Anschlußbereich zur nächsten Ebene voraus. Im Anschlußbereich darf die Kontur nicht wie in Figur 1 im wesentlichen eben sein, sondern müßte beispielsweise wellenförmig oder zickzackförmig gestaltet sein.

In den Figuren 3 und 4 ist eine Detailansicht der Kopfstücke 20 dargestellt. In diesen Figuren ist deutlich zu sehen, wie der Hohlraum 15 über die Bohrung 26 mit dem Strömungskanal 24 kommuniziert. Die Höhe der sich zum freien Ende des Kopfstücks 20 hin konisch verjüngenden Seitenwände 21 kann vorteilhaft 3cm betragen.

Während des Betriebs der Vorrichtung 10 sorgt der Druck des im Hohlraum 15 der Speicherbehälter 11 gespeicherten Druckgases dafür, daß das als Rückschlagventil ausgebildete Ventil 27 in der geöffneten Stellung verbleibt. Das in den Speicherbehältem 11 gespeicherte Druckgas kann somit aus den Speicherbehältem 11 austreten und über den Strömungskanal 24 einem nicht dargestellten Anschluß zum Be- und/oder Entladen des Druckgases zugeführt werden.

Im Falle der Beschädigung eines der Speicherbehälter 11, beispielsweise durch Aufreißen oder Aufplatzen der Behälterwand 12 sorgt der im betreffenden Speicherbehälter 11 abfallende Gasdruck dafür, daß das Ventil 27 auf Grund des im Strömungskanal 24 herrschenden Gasdrucks geschlossen wird. Das aus den übrigen Speicherbehältem 11 austretende Gas kann somit durch den beschädigten Speicherbehälter 11 nicht entweichen, so daß die Vorrichtung 10 trotz des beschädigten Speicherbehälters 11 weiter benutzt werden kann.

Zum Austausch des beschädigten Speicherbehälters 11 werden die Muttern 29 an den Verbindungselementen 23 gelöst. Dadurch können die einzelnen Speicherbehälter 11 voneinander gelöst werden, indem sie von den Verbindungselementen 23 abgezogen werden. Nunmehr kann der beschädigte Speicherbehälter 11 auf einfache Weise durch einen neuen Speicherbehälter 11 ersetzt werden. Anschließend werden die Speicherbehälter 11 in der oben beschriebenen Weise erneut zusammengefügt.

Durch die freie Variierbarkeit der einzelnen Speicherbehälter 11 in der Vorrichtung 10 können Speichersysteme geschaffen werden, die auch in Räumen mit komplexer geometrischer Struktur eingesetzt werden können. Dadurch wird eine universell verwendbare Vorrichtung 10 zum Speichern von Druckgas geschaffen. Weiterhin kann die Vorrichtung 10 auf die Menge und die Art des zu speichernden Druckgases jeweils individuell eingestellt werden.

## Patentansprüche

1. Vorrichtung zum Speichern von Druckgas, mit einer Vielzahl von Speicherbehältern (11), die jeweils eine Behälterwand (12) aufweisen, die einen zur Speicherung des Druckgases vorgesehenen Hohlraum (15) umschließt, wobei die Speicherbehälter (11) untereinander leitungsmäßig verbunden sind und jeder Speicherbehälter (11) ein Kopfstück (20) aufweist, das mit der Behälterwand (12) verbunden ist, und mit wenigstens einem Anschluss zum Be- und/oder Entladen des Druckgases,
**dadurch gekennzeichnet,**
**dass** die Speicherbehälter (11) über die jeweiligen sich gegenseitig berührenden Kopfstücke (20) modulartig zu einer kompakten Baueinheit mechanisch miteinander verbunden sind.

2. Vorrichtung nach Anspruch 1,
**dadurch gekennzeichnet,**
**daß** das Kopfstück (20) stoffschlüssig, vorzugsweise mittels Löten oder Schweißen mit der Behälterwand (12) verbunden ist.

3. Vorrichtung nach Anpruch 1 oder 2,
**dadurch gekennzeichnet,**
**daß** die Behälterwand (12) zylindrisch ausgebildet ist.

4. Vorrichtung nach einem der Ansprüche 1 bis 3,
**dadurch gekennzeichnet,**
**daß** die Speicherbehälter (11) eine Hüllschicht (16) aufweisen, die zumindest in Teilbereichen des jeweiligen Speicherbehälters (11) an der Behälterwand (12) angeordnet ist.

5. Vorrichtung nach einem der Ansprüche 1 bis 4,
**dadurch gekennzeichnet,**
**daß** die Speicherbehälter (11) in ihrem zur Aufnahme in dem Kopfstück (20) dienenden Endbereich (13) der Behälterwand (12) eine konische Querschnittsverjüngung (14) aufweist.

6. Vorrichtung nach einem der Ansprüche 1 bis 5,
**dadurch gekennzeichnet,**
**daß** die Speicherbehälter (11) über die Kopfstücke (20) lösbar miteinander verbunden sind.

7. Vorrichtung nach einem der Ansprüche 1 bis 6,
**dadurch gekennzeichnet,**
**daß** zur Verbindung der Speicherbehälter (11) Verbindungselemente (23) vorgesehen sind und daß die Verbindungselemente (23) vorzugsweise stabförmig ausgebildet sind.

8. Vorrichtung nach einem der Ansprüche 1 bis 7,
**dadurch gekennzeichnet,**
**daß** jedes der Kopfstücke (20) wenigstens eine, vorzugsweise zwei Öffnungen (22) zur Aufnahme von Verbindungselementen (23) aufweist.

9. Vorrichtung nach Anspruch 8,
**dadurch gekennzeichnet,**
**daß** sich die wenigstens eine Öffnung (22) durchgehend über die gesamte Breite des Kopfstücks (20) erstreckt.

10. Vorrichtung nach einem der Ansprüche 1 bis 9,
**dadurch gekennzeichnet,**
**daß** im Kopfstück (20) ein Strömungskanal (24) zum Durchleiten des Druckgases vorgesehen ist, daß sich der Strömungskanal (24) durchgehend über die gesamte Breite des Kopfstücks (20) erstreckt und daß der Strömungskanal (24) über eine Bohrung (26) mit dem Hohlraum (15) des Speicherbehälters (11) kommuniziert.

11. Vorrichtung nach Anspruch 10,
**dadurch gekennzeichnet,**
**daß** der Strömungskanal (24) in den stirnseitigen Endbereichen des Kopfstücks (20) ein Dichtungselement (25) aufweist.

12. Vorrichtung nach Anspruch 10 oder 11,
**dadurch gekennzeichnet,**
**daß** in der Bohrung (26) ein Ventil (27), vorzugsweise ein Rückschlagventil angeordnet ist.

13. Vorrichtung nach einem der Ansprüche 1 bis 12,
**dadurch gekennzeichnet,**
**daß** wenigstens eines der Kopfstücke (20) eine Anschlußöffnung (28) für das Beund Entladen aufweist.

14. Vorrichtung nach einem der Ansprüche 1 bis 13,
**dadurch gekennzeichnet,**
**daß** der Speicherbehälter (11), an dem dem Endbereich (13) gegenüberliegenden Ende der Behälterwand (12) ein Deckelelement (40) aufweist.

15. Vorrichtung nach einem der Ansprüche 1 bis 14,
**dadurch gekennzeichnet,**
**daß** das Kopfstück (20) und/oder das Deckelelement (40) aus Metall, vorzugsweise aus Guß-Material besteht.

16. Vorrichtung nach einem der Ansprüche 1 bis 15,
**dadurch gekennzeichnet,**
**daß** die Behälterwand (12) aus einem Material gebildet ist, das zur Aufnahme von Kräften in Längsrichtung des Speicherbehälters (11) geeignet ist, vorzugsweise aus Metall, Kunststoff und/oder einem Faserverbundmaterial.

17. Vorrichtung nach einem der Ansprüche 1 bis 16,
**dadurch gekennzeichnet,**
**daß** die Hüllschicht (16) aus einem Material gebildet ist, das zur Aufnahme von Kräften in Umfangsrichtung des Speicherbehälters (11) geeignet ist, vorzugsweise aus Kunststoff und/oder einem Faserverbundmaterial.

18. Vorrichtung nach einem der Ansprüche 1 bis 17,
**dadurch gekennzeichnet,**
**daß** mehrere Reihen von nebeneinander angeordneten Speicherbehältern (11) zu einem schichtartig aufgebauten Gesamtspeicher miteinander über die Kopfstücke (20) verbunden oder verbindbar sind.

19. Vorrichtung nach einem der Ansprüche 1 bis 18,
**dadurch gekennzeichnet,**
**daß** die Speicherbehälter (11) in unmittelbar benachbarten Schichten des Gesamtspeichers jeweils versetzt zueinander angeordnet sind.

## Claims

1. Device for storing pressurised gas, with a plurality of storage containers (11) each of which has a container wall (12) which encloses a cavity (15) intended for storage of the pressurised gas, the storage containers (11) being conductively connected to one another and each storage container (11) having a top piece (20) which is connected to the container wall (12), and with at least one connection for filling with pressurised gas and/or emptying the pressurised gas, **characterised in that** the storage containers (11) are mechanically joined together in modular form to produce a compact unit, via the top pieces (20) which are in mutual contact.

2. Device according to claim 1, **characterised in that** the top piece (20) is materially connected to the container wall (12), preferably by soldering or welding.

3. Device according to claim 1 or 2, **characterised in that** the container wall (12) is of cylindrical construction.

4. Device according to one of claims 1 to 3, **characterised in that** the storage containers (11) have a covering layer (16) which is arranged on the container wall (12) at least in areas of the storage container (11) in question.

5. Device according to one of claims 1 to 4, **characterised in that** the storage containers (11) have a conically tapering shape (14) in cross section in their end portion (13) of the container wall (12) which is received in the top piece (20).

6. Device according to one of claims 1 to 5, **characterised in that** the storage containers (11) are releasably connected to one another via the top pieces (20).

7. Device according to one of claims 1 to 6, **characterised in that** connecting elements (23) are provided for joining the storage containers (11) and the connecting elements (23) are preferably rod-shaped in structure.

8. Device according to one of claims 1 to 7, **characterised in that** each of the top pieces (20) has at least one and preferably two openings (22) for accommodating connecting elements (23).

9. Device according to claim 8, **characterised in that** the minimum of one opening (22) extends continuously through the entire width of the top piece (20).

10. Device according to one of claims 1 to 9, **characterised in that** a flow channel (24) for the passage of the pressurised gas is provided in the top piece (20), the flow channel (24) extends continuously through the entire width of the top piece (20) and the flow channel (24) communicates with the cavity (15) of the storage container (11) through a bore (26).

11. Device according to claim 10, **characterised in that** the flow channel (24) has a sealing element (25) in the terminal end portions of the top piece (20).

12. Device according to claim 10 or 11, **characterised in that** a valve (27), preferably a nonreturn valve, is provided in the bore (26).

13. Device according to one of claims 1 to 12,
**characterised in that** at least one of the top pieces (20) has a connecting opening (28) for filling and emptying.

14. Device according to one of claims 1 to 13, **characterised in that** the storage container (11) comprises a cover element (40) on the end of the container wall (12) opposite the end portion (13).

15. Device according to one of claims 1 to 14, **characterised in that** the top piece (20) and/or the cover element (40) consists of metal, preferably cast material.

16. Device according to one of claims 1 to 15, **characterised in that** the container wall (12) is formed from a material which is suitable to withstand forces in the longitudinal direction of the storage container (11), preferably a metal, plastics and/or composite fibre material.

17. Device according to one of claims 1 to 16, **characterised in that** the covering layer (16) is formed from a material capable of withstanding forces in the circumferential direction of the storage container (11), preferably a plastics and/or composite fibre material.

18. Device according to one of claims 1 to 17, **characterised in that** a plurality of rows of storage containers (11) arranged side by side are joined together or capable of being joined together via the top pieces (20) to form a combined store of layered structure.

19. Device according to one of claims 1 to 18, **characterised in that** the storage containers (11) are arranged offset from one another in immediately adjacent layers of the combined store.

## Revendications

1. Dispositif d'emmagasinage d'un gaz sous pression comportant plusieurs réservoirs (11) présentant chacun une paroi (12) qui entoure une cavité (15) prévue pour l'emmagasinage du gaz sous pression, dans lequel les réservoirs (11) sont raccordés entre eux par des conduites et chaque réservoir (11) présente un élément de tête (20) raccordé à sa paroi (12), et comportant au moins un orifice destiné à l'amenée et/ou à l'évacuation du gaz sous pression,
**caractérisé en ce que**
les réservoirs (11) sont mécaniquement raccordés entre eux de manière modulaire par l'intermédiaire des éléments de tête (20) respectifs mutuellement en contact pour former une unité compacte.

2. Dispositif selon la revendication 1,
**caractérisé en ce que**
l'élément de tête (20) est raccordé à la paroi du réservoir (12) de manière non démontable, de préférence par brasage ou soudage.

3. Dispositif selon la revendication 1 ou 2,
**caractérisé en ce que**
la paroi du réservoir (12) est de forme cylindrique.

4. Dispositif selon l'une quelconque des revendications 1 à 3,
**caractérisé en ce que**
les réservoirs (11) présentent une couche de gainage (16) disposée au moins en certaines parties du réservoir (11) sur sa paroi (12).

5. Dispositif selon l'une quelconque des revendications 1 à 4,
**caractérisé en ce que**
les réservoirs (11) présentent un rétrécissement de coupe transversale conique (14) dans la partie terminale (13) de leur paroi (12) servant à la réception de l'élément de tête (20).

6. Dispositif selon l'une quelconque des revendications 1 à 5,
**caractérisé en ce que**
les réservoirs (11) sont raccordés entre eux par l'intermédiaire des éléments de tête (20) de manière détachable.

7. Dispositif selon l'une quelconque des revendications 1 à 6,
**caractérisé en ce que**
des éléments de raccordement (23) sont prévus pour raccorder les réservoirs (11) et ces éléments de raccordement (23) ont une forme de préférence tubulaire.

8. Dispositif selon l'une quelconque des revendications 1 à 7,
**caractérisé en ce que**
chacun des éléments de tête (20) présente au moins une, de préférence deux, ouverture(s) (22) servant au logement des éléments de raccordement (23).

9. Dispositif selon la revendication 8,
**caractérisé en ce que**
au moins une ouverture (22) se prolonge au travers de la largeur totale de l'élément de tête (20).

10. Dispositif selon l'une quelconque des revendications 1 à 9,
**caractérisé en ce que**
dans l'élément de tête (20), il est prévu un canal d'écoulement (24) servant au passage du gaz sous pression, ce canal d'écoulement (24) se prolonge au travers de la largeur totale de l'élément de tête (20) et ce canal d'écoulement (24) communique avec la cavité (15) du réservoir (11) au travers d'un perçage (26).

11. Dispositif selon la revendication 10,
**caractérisé en ce que**
le canal d'écoulement (24) présente un élément d'étanchéification (25) dans la partie terminale frontale de l'élément de tête (20).

12. Dispositif selon la revendication 10 ou 11,
**caractérisé en ce**
**qu'**un clapet (27), de préférence un clapet anti-retour, est disposé dans le perçage (26).

13. Dispositif selon l'une quelconque des revendications 1 à 12,
**caractérisé en ce que**
au moins un des éléments de tête (20) présente un orifice (28) destiné à l'amenée et à l'évacuation du gaz sous pression.

14. Dispositif selon l'une quelconque des revendications 1 à 13,
**caractérisé en ce que**
le réservoir (11) présente un élément de couvercle (40) à l'extrémité de la paroi de conteneur (12) opposée à la partie terminale (13).

15. Dispositif selon l'une quelconque des revendications 1 à 14,
**caractérisé en ce que**
l'élément de tête (20) et/ou l'élément de couvercle (40) est constitué de métal, de préférence d'un matériau coulé.

16. Dispositif selon l'une quelconque des revendications 1 à 15,
**caractérisé en ce que**
la paroi du réservoir (12) est constituée d'un matériau approprié pour absorber des forces dans la direction longitudinale du réservoir (11), de préférence de métal, de plastique et/ou d'un matériau composite.

17. Dispositif selon l'une quelconque des revendications 1 à 16,
**caractérisé en ce que**
la couche de gainage (16) est constituée d'un matériau approprié pour absorber des forces dans la direction circonférentielle du réservoir (11), de préférence de plastique et/ou d'un matériau composite.

18. Dispositif selon l'une quelconque des revendications 1 à 17,
**caractérisé en ce que**
plusieurs rangées de réservoirs (11) contigus sont raccordées ou raccordables entre elles par l'intermédiaire des éléments de tête (20) pour former un accumulateur global présentant une construction en couche.

19. Dispositif selon l'une quelconque des revendications 1 à 18,
**caractérisé en ce que**
les réservoirs (11) disposés en des couches directement adjacentes de l'accumulateur global sont décalés les uns par rapport aux autres.
